# EUROPÄISCHE PATENTSCHRIFT

(11) **EP 3 807 545 B1**
(45) Veröffentlichungstag und Bekanntmachung des Hinweises auf die Patenterteilung: **21.06.2023**
(21) Anmeldenummer: 19728408.6
(22) Anmeldetag: 03.06.2019
(51) Int. Cl.: F16B 35/06

(54) **SCHRAUBE**
SCREW
VIS

(30) Priorität: 13.06.2018 DE 102018114143; 14.05.2019 DE 102019112570
(43) Veröffentlichungstag der Anmeldung: 21.04.2021
(73) Patentinhaber: fischerwerke GmbH & Co. KG, 72178 Waldachtal (DE)
(72) Erfinder: SCHNEIDER, Mattias, 72213 Altensteig (DE); KRUMBECK, Markus, 71159 Mötzingen (DE); KLAUSER, Philipp, 71131 Jettingen (DE)
(86) Internationale Anmeldenummer: PCT/EP2019/064259
(87) Internationale Veröffentlichungsnummer: WO 2019/238439

(56) Entgegenhaltungen:
- EP-A1- 2 372 177
- WO-A1-2009/113956
- WO-A1-2018/074972
- DE-A1- 4 121 061

## Beschreibung

Die Erfindung betrifft eine Schraube mit den Merkmalen des Oberbegriffs des Anspruchs 1. Insbesondere betrifft die Erfindung eine Holzschraube, d. h. eine Schraube mit einem Holzschraubengewinde.

Viele Holzschrauben (siehe z.B. WO 2018/ 074972) weisen einen Senkkopf auf, das heißt einen Schraubenkopf mit kegelstumpfförmiger Kopfunterseite, der bei einem Einschrauben der Schraube mit einem Akkuschrauber in das Holz eingezogen wird und dabei eine komplementäre Senkung im Holz erzeugt.

Das Gebrauchsmuster DE 20 2007 018 179 U1 offenbart eine Holzschraube mit einem Senkkopf, der in einer Kopfunterseite Vertiefungen als Frästaschen aufweist, die von zwei radialen und zwei in Umfangsrichtung verlaufenden, kreisbogenförmigen Kanten begrenzt werden. Hintere Kanten der Frästaschen bilden Schneiden, die bei einem Einziehen des Schraubenkopfs in Holz beim Einschrauben der Schraube Späne von dem Holz trennen und dadurch eine Senkung für den Schraubenkopf erzeugen oder jedenfalls die Erzeugung der Senkung erleichtern. "Hinten" bezieht sich auf eine Drehrichtung der Holzschraube bei einem Einschrauben in Holz oder einen anderen Werkstoff

Aufgabe der Erfindung ist, eine Zerspanungswirkung von Frästaschen an einer Kopfunterseite eines Senkkopfs einer Schraube in Holz, Kunststoff oder dergleichen zu verbessern und/oder eine Schwächung der Schraube im Bereich des Schraubenkopfs und/oder eines Übergangs vom Schraubenkopf zu einem Schraubenschaft zu verringern. Mit "dergleichen" sind Werkstoffe gemeint, die hinsichtlich ihrer Zerspanungseigenschaften ähnlich wie Holz oder Kunststoff sind, so dass die Schneiden der Frästaschen an der Kopfunterseite der Schraube eine Senkung bilden.

Diese Aufgabe wird erfindungsgemäß durch die Merkmale des Anspruchs 1 gelöst. Nach einer Ausführungsform ist die erfindungsgemäße Schraube insbesondere eine Holzschraube mit einem Holzschraubengewinde. Sie weist einen Senkkopf mit einer Kopfunterseite als Schraubenkopf auf.

Der Schraubenkopf weist die Form zweier axial aneinander anschließender Kegelstümpfe mit verschiedenen Kegelwinkeln auf, die sich in gleicher Richtung verjüngen. Mantellinien der Kopfunterseite in Axialebenen weisen also einen Knick, und eine Mantelfläche der Kopfunterseite eine umlaufende Innenkante auf.

Mit der "Mantelfläche" ist eine bezüglich der Längsachse der Schraube rotationssymmetrische Fläche gemeint, die die Kopfunterseite umschreibt. Aus dieser rotationssymmetrischen Fläche ist mindestens eine Frästasche ausgenommen, vorzugsweise sind mehrere Frästaschen ausgenommen, die geometrisch identisch sind und die insbesondere drehsymmetrisch bezüglich der Längsachse angeordnet sind. Die mindestens eine Frästasche bildet eine Vertiefung in der Kopfunterseite, die an einem Übergang zur Mantelfläche von einer Schnittlinie begrenzt wird, die, bezogen auf die Drehrichtung der Schraube beim Einschrauben, aus einer vorderen und einer hinteren Kante umschrieben wird. Vordere und hintere Kante bilden gemeinsam die Schnittlinie. Die hintere Kante bildet eine Schneide, die bei einem Einschrauben der Schraube und Einziehen des Schraubenkopfs in Holz, Kunststoff oder dergleichen Späne abtrennt und dadurch eine Senkung für den Schraubenkopf erzeugt oder jedenfalls zur Erzeugung der Senkung beiträgt. "Hinten" und "vorne" bezieht sich stets auf eine Drehrichtung der Schraube beim Einschrauben. Die "hintere" Kante läuft in Drehrichtung der "vorderen" nach. Die hintere Kante, beziehungsweise die Schneide, kann aus mehreren, ineinander übergehenden Abschnitten bestehen.

Die in der Drehrichtung beim Einschrauben der Schraube vordere Kante der Frästasche besteht an einem Übergang zu der Mantelfläche der Kopfunterseite aus zwei Abschnitten und weist in dem bezüglich einer Längsachse der Schraube radial weiter außen befindlichen ersten Abschnitt eine Krümmung in der Drehrichtung beim Einschrauben der Schraube auf. Mit "Krümmung in der Drehrichtung" ist gemeint, dass die Wölbung in Drehrichtung weist, also in die der Schneide abgewandte Richtung. Insbesondere beträgt der maximale Abstand einer gedachten Sehne des Abschnitts zur vorderen Kante mindestens 5 Prozent der Länge der Sehne. Der radial bezüglich der Längsachse der Schraube weiter innen befindliche zweite Abschnitt der in der Drehrichtung beim Einschrauben der Schraube vorderen Kante der Frästasche am Übergang zur Mantelfläche der Kopfunterseite ist gerade. Im Weiteren ist "innen" und "außen" stets in radialer Richtung zur Längsachse der Schraube zu verstehen, also "innen" als "nahe der Längsachse der Schraube". Die

Kopfunterseite weist erfindungsgemäß die Form zweier axial aneinander anschließender Kegelstümpfe auf, zudem befindet sich der Abschnitt der vorderen Kante der Frästasche mit der Krümmung am durchmessergrößeren Kegelstumpf und schließt außen an die umlaufende Innenkante an, an der die beiden Kegelstümpfe ineinander übergehen. Der gerade Abschnitt der vorderen Kante der Frästasche befindet sich am durchmesserkleineren Kegelstumpf. Der erste Abschnitt der vorderen Kante geht an der umlaufenden Innenkante in den zweiten Abschnitt über.

Durch die Krümmung der vorderen Kante der Frästasche an dem Übergang zur Mantelfläche der Kopfunterseite in dem weiter außen befindlichen Abschnitt weist die Frästasche eine größere Länge in einer Umfangsrichtung auf, wodurch auch die Freifläche der Frästasche in der Umfangsrichtung verlängert ist. Die Freifläche ist eine Fläche der Frästasche, die sich in der Drehrichtung beim Einschrauben der Schraube vor der Schneide befindet. Die Frästasche kann bei kleiner Tiefe ein relativ großes Volumen aufweisen, wodurch die Fräswirkung verbessert wird, ohne den Kopf zu sehr zu schwächen. Die Verlängerung der Frästasche und der Freifläche in der Umfangsrichtung verbessert somit ein Eindringen der Schneide der Frästasche in das Werkstück und verbessert dadurch eine Zerspanungswirkung der Frästasche und der Schneide.

Dadurch, dass die vordere Kante der Frästasche in dem weiter innen befindlichen zweiten Abschnitt gerade ist, als in dem weiter außen befindlichen Abschnitt, ist die Frästasche in dem weiter innen befindlichen zweiten Abschnitt in der Umfangsrichtung kürzer, als der erste Abschnitt. Dadurch ist der Schraubenkopf in dem weiter innen befindlichen zweiten Abschnitt weniger geschwächt als es der Schraubenkopf bei einer Krümmung oder einer stärkeren Krümmung der gesamten vorderen Kante wäre. Eine mechanische Beanspruchung des Schraubenkopfs durch ein Drehmoment beim Einschrauben der Schraube ist radial näher an der Längsachse größer, weswegen dort eine Schwächung des Schraubenkopfs durch die Frästasche möglichst klein sein sollte. Hinzu kommt, dass ein Innensechskant, Innenstern (TORX) oder dergleichen Werkzeugsitz im Schraubenkopf für ein Drehwerkzeug zum Einschrauben der Schraube den Schraubenkopf insbesondere in dem weiter innen befindlichen zweiten Abschnitt zusätzlich schwächt.

Die vordere Kante der Frästasche in dem weiter innen befindlichen zweiten Abschnitt ist bei einer Ausgestaltung der Erfindung eine Schnittlinie einer gedachten ebenen Fläche mit der Mantelfläche der Kopfunterseite des Schraubenkopfs. Diese Schnittlinie ist nur dann eine Gerade, wenn die ebene Fläche eine Axialfläche ist. Vorzugsweise ist sie allerdings eine Sekantenfläche. Mit "nahezu gerade" ist insbesondere eine solche Schnittlinie einer Sekantenfläche mit der Mantelfläche der Kopfunterseite gemeint.

Eine Ausgestaltung der Erfindung sieht vor, dass die in der Drehrichtung beim Einschrauben der Schraube vordere Kante der Frästasche in dem weiter innen befindlichen zweiten Abschnitt von innen nach außen schräg in der Drehrichtung beim Einschrauben der Schraube verläuft.

Vorzugsweise verläuft die Schneide von innen nach außen schräg entgegen der Drehrichtung beim Einschrauben der Schraube. Durch die schräge Anordnung verbessert sich gegenüber einer geraden Anordnung der Schneide das Fräsverhalten. Es kommt zu einem sogenannten "ziehenden" Schnitt, wie er vom Hobeln bekannt ist. Insbesondere verlaufen also der innen befindliche zweite Abschnitt der vorderen Kante und die Schneide jeweils schräg in unterschiedliche Richtungen, nämlich zum einen in der Drehrichtung und zum anderen entgegen der Drehrichtung.

Eine Ausgestaltung der Erfindung sieht eine hohlrunde Grundfläche der Frästasche vor. "Hohlrund" bedeutet hier, wie bereits oben, eine zweidimensionale konkave Wölbung. Die Grundfläche ist die sich an die in der Drehrichtung beim Einschrauben vordere Kante der Frästasche anschließende Fläche. Sie ist, wie oben bereits erläutert, eine Freifläche und verbessert durch eine hohlrunde Gestaltung die Zerspanungswirkung und vergrößert ein Spanaufnahmevolumen der Frästasche.

Es sind Ausführungen der Erfindung möglich, die nicht alle Merkmale eines abhängigen Anspruchs aufweisen.

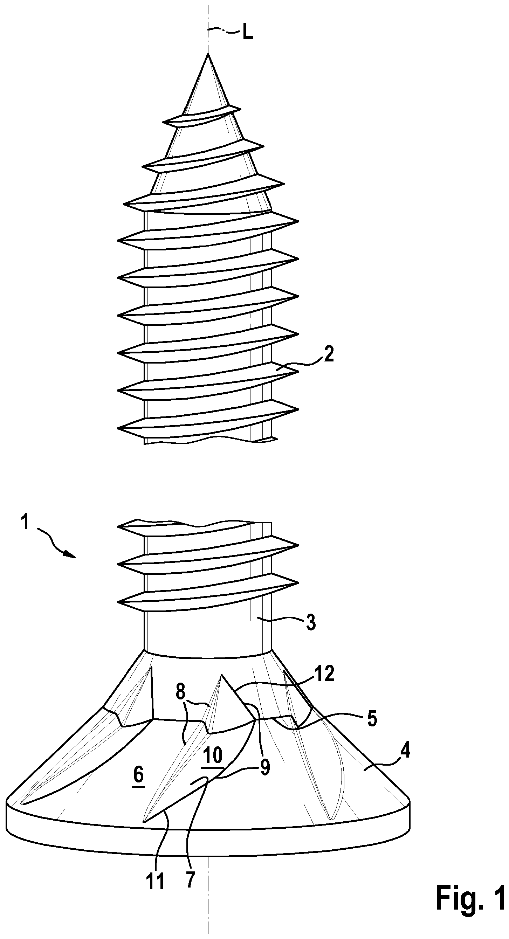

Die Erfindung wird nachfolgend anhand eines in der Zeichnung dargestellten Ausführungsbeispiels näher erläutert. Die einzige Figur zeigt eine erfindungsgemäße Schraube.

Die in der Zeichnung dargestellte, erfindungsgemäße Schraube 1 ist eine Holzschraube mit einem ein Holzschraubengewinde 2 aufweisenden Schraubenschaft 3. Die Schraube 1 weist einen Senkkopf 4 als Schraubenkopf auf, der bzw. dessen Kopfunterseite die Form zweier axial aneinander anschließender Kegelstümpfe aufweist. Die beiden den Senkkopf 4 bildenden Kegelstümpfe verjüngen sich in derselben Richtung, nämlich weg vom Schraubenschaft 3, und gehen an einer umlaufenden, kreisförmigen Innenkante 5 ineinander über. Die Form der Kopfunterseite kann wegen der umlaufenden Innenkante 5 auch als konkav aufgefasst werden. Ein durchmesserkleinerer der beiden Kegelstümpfe weist einen spitzeren Kegelwinkel auf.

Aus einer Mantelfläche 6 der Kopfunterseite sind Frästaschen 7 ausgenommen. Die Mantelfläche 6 ist der rotationssymmetrische, kegelige Teil der Fläche der Kopfunterseite. Ohne die Frästaschen 7 würde also die Mantelfläche 6 die gesamte Kopfunterseite bilden. Die Frästaschen 7 werden an einem Übergang zur Mantelfläche durch eine in einer Drehrichtung bei einem Einschrauben der Schraube 1 hinteren Kante und einer vorderen Kante umschlossen, die ineinander übergehen.

Die hinteren Kanten der Frästaschen 7 an einem Übergang zur Mantelfläche 6 der Kopfunterseite bilden Schneiden 8, die bei einem Einschrauben der Schraube 1 in ein Werkstück (nicht dargestellt) aus beispielsweise Holz oder Kunststoff Späne vom Werkstück trennen und dadurch eine Senkung für den als Senkkopf 4 ausgebildeten Schraubenkopf der Schraube 1 erzeugen oder jedenfalls die Erzeugung der Senkung erleichtern. Die Schneiden 8 verlaufen von innen nach außen schräg entgegen der Drehrichtung beim Einschrauben. Da die Schneiden 8 die Innenkante 5 kreuzen, weisen sie zwei ineinander übergehende Abschnitte auf, die jeweils im Wesentlichen gerade und zueinander schräg stehen. "Innen" und "außen" beziehen sich auf einen Abstand zu einer Längsachse L der Schraube 1, wobei "innen" der Abstand zur Längsachse geringer ist, als "außen".

In der Drehrichtung beim Einschrauben der Schraube 1 vordere Kanten 9 der Frästaschen 7 an dem Übergang zur Mantelfläche 6 der Kopfunterseite bestehen aus zwei Abschnitten: einem ersten äußeren Abschnitt 11 und einem zweiten inneren Abschnitt 12. Die im durchmessergrößeren Kegelstumpf des als Senkkopf 4 ausgebildeten Schraubenkopfs angeordneten ersten äußeren Abschnitte 11 der vorderen Kanten 9 weisen eine Krümmung in der Drehrichtung beim Einschrauben der Schraube 1 auf, wobei im Ausführungsbeispiel ein Krümmungsradius der ersten äußeren Abschnitte 11 der vorderen Kanten 9 der Frästaschen 7 ausgehend von der Innenkante 5 am Übergang der beiden Kegelstümpfe des Senkkopfs 4 nach außen zunächst konstant ist, dann abnimmt und zu ihrem äußeren Ende hin, wenn sich die vorderen Kanten 9 den hinteren, die Schneiden 8 bildenden Kanten der Frästaschen 7 nähern, zunimmt beziehungsweise die äußeren Abschnitte 11 sprunghaft in die Schneiden 8 übergehen. Die Schneiden 8 verlaufen von innen nach außen ebenfalls in zwei Abschnitten, die allerdings jeweils gerade sind.

Die inneren Abschnitte 12 der in der Drehrichtung beim Einschrauben der Schraube 1 vorderen Kanten 9 der Frästaschen 7 am Übergang zur Mantelfläche 6 der Kopfunterseite sind im Bereich des durchmesserkleineren Kegelstumpfs des Senkkopfs 4 gerade bzw. genau genommen Schnittlinien gedachter ebener, achsparalleler Sekantenflächen mit dem durchmesserkleineren Kegelstumpf des Senkkopfs 4, was als "nahezu gerade" bezeichnet werden kann. Im Bereich des durchmesserkleineren Kegelstumpfs des Senkkopfs 4 verlaufen die inneren Abschnitte 12 der vorderen Kanten 9 der Frästaschen 7 schräg von innen nach außen in der Drehrichtung beim Einschrauben der Schraube 1.

Allgemein formuliert weisen die in der Drehrichtung beim Einschrauben der Schraube 1 vorderen Kanten 9 der Frästaschen 7 in einem bezüglich der Längsachse der Schraube 1 weiter innen befindlichen Abschnitt 12 eine kleinere Krümmung als in einem sich nach außen anschließenden, radial weiter außen befindlichen Abschnitt 11 auf. Im Ausführungsbeispiel beginnt die Krümmung der vorderen Kanten 9 der Frästaschen 7 in der Drehrichtung beim Einschrauben der Schraube 1 an der Innenkante 5. Die inneren Abschnitte 12 gehen an der Innenkante 5 in die äußeren Abschnitte 11 über. Von der Innenkante 5 nach außen bleibt eine Krümmung der vorderen Kanten 9 der Frästaschen 7 zunächst konstant oder vergrößert sich dann, während die Innenkante 5 nach innen, im Bereich des zweiten inneren Abschnitts, gerade verläuft.

Die Krümmung der vorderen Kanten 9 der Frästaschen 7 in der Drehrichtung beim Einschrauben der Schraube 1 verlängert die Frästaschen 7 und deren Freiflächen 10 in der Umfangsrichtung. Die Freiflächen 10 sind an die vorderen Kanten 9 anschließende Flächen der Frästaschen 7, die auch als Grundflächen der Frästaschen 7 aufgefasst werden können. Im Unterschied zur Mantelfläche der Kopfunterseite liegen die Freiflächen 10 nicht an einem Werkstück an, wenn der Senkkopf 4 in das Werkstück versenkt wird, jedenfalls soweit sich das Werkstück nicht teilweise elastisch verhält, weswegen die Freiflächen 10 einen Eingriff der Schneiden 8 in das Werkstück und eine Spannungswirkung der Schneiden 8 verbessern.

Die Wirkung der Freiflächen 10, die die Grundflächen der Frästaschen 7 sind, wird verbessert, indem diese hohlrund, das heißt zweidimensional konkav gewölbt sind. Das verbessert nicht nur den Eingriff der Schneiden 8 in das Werkstück, sondern vergrößert auch ein Volumen der Frästaschen 7 und damit einen Spanraum zur Aufnahme von Spänen.

### Bezugszeichenliste

- 1: Schraube
- 2: Holzschraubengewinde
- 3: Schraubenschaft
- 4: Senkkopf
- 5: Innenkante
- 6: Mantelfläche
- 7: Frästaschen
- 8: Schneide
- 9: vordere Kante
- 10: Freifläche
- 11: erster Abschnitt der Kante 9
- 12: zweiter Abschnitt der Kante 9
- L: Längsachse

## Patentansprüche

1. Schraube mit einem Senkkopf (4) mit einer Kopfunterseite als Schraubenkopf, wobei aus einer Mantelfläche der Kopfunterseite mindestens eine Frästasche (7) ausgenommen ist, deren in einer Drehrichtung bei einem Einschrauben der Schraube (1) hintere Kante an einem Übergang zu der Mantelfläche der Kopfunterseite eine Schneide (8) zur Herstellung einer Senkung in einem Werkstück bei einem Einschrauben der Schraube (1) in das Werkstück bildet, wobei eine in der Drehrichtung beim Einschrauben der Schraube (1) vordere Kante (9) der Frästasche (7) an einem Übergang zu der Mantelfläche (6) der Kopfunterseite aus zwei Abschnitten (11, 12) besteht, die in dem bezüglich einer Längsachse der Schraube (1) radial weiter außen befindlichen ersten Abschnitt (11) eine Krümmung in der Drehrichtung beim Einschrauben der Schraube (1) aufweist und die in dem radial weiter innen befindlichen zweiten Abschnitt (12) gerade ist wobei der Schraubenkopf die Form zweier axial aneinander anschließender Kegelstümpfe mit verschiedenen Kegelwinkeln aufweist, wobei sich die Kegelstümpfe in gleicher Richtung verjüngen und in einer umlaufenden Innenkante (5) der Mantelfläche ineinander übergehen, **dadurch gekennzeichnet, dass** sich der erste Abschnitt (11) der vorderen Kante (9) der Frästasche (7) mit der Krümmung am durchmessergrößeren Kegelstumpf befindet und außen an die umlaufende Innenkante (5) anschließt, an der die beiden Kegelstümpfe ineinander übergehen, dass der zweite, gerade Abschnitt (12) der vorderen Kante (9) der Frästasche (7) sich am durchmesserkleineren Kegelstumpf befindet, und dass der erste Abschnitt (11) der vorderen Kante (9) an der umlaufenden Innenkante (5) in den zweiten Abschnitt (12) übergeht.

2. Schraube nach Anspruch 1, **dadurch gekennzeichnet, dass** die in der Drehrichtung beim Einschrauben der Schraube (1) vordere Kante (9) der Frästasche (7) in dem radial weiter innen befindlichen zweiten Abschnitt (12) eine Schnittlinie einer Ebene mit der Mantelfläche der Kopfunterseite ist.

3. Schraube nach Anspruch 1 oder 2, **dadurch gekennzeichnet, dass** die in der Drehrichtung beim Einschrauben der Schraube (1) vordere Kante (9) der Frästasche (7) in dem radial weiter innen befindlichen zweiten Abschnitt (12) von innen nach außen schräg in der Drehrichtung beim Einschrauben der Schraube (1) verläuft.

4. Schraube nach einem oder mehreren der Ansprüche 1 bis 3, **dadurch gekennzeichnet, dass** die Schneide (8) von innen nach außen schräg entgegen der Drehrichtung beim Einschrauben der Schraube (1) verläuft.

5. Schraube nach einem oder mehreren der vorhergehenden Ansprüche, **dadurch gekennzeichnet, dass** eine Grundfläche der Frästasche (7), die sich an die in der Drehrichtung beim Einschrauben der Schraube (1) vordere Kante (9) der Frästasche (7) anschließt, hohlrund gewölbt ist.

## Claims

1. Screw having a countersunk head (4) with a head underside as screw head, wherein at least one milling pocket (7) is cut out of a lateral surface of the underside of the head, the edge of which milling pocket that is at the rear in a direction of rotation during screwing-in of the screw (1) at the transition to the lateral surface of the underside of the head forms a cutter (8) for producing a countersink in a workpiece when the screw (1) is screwed into the workpiece, wherein an edge (9) of the milling pocket (7) that is at the front in the direction of rotation during screwing-in of the screw (1) at the transition to the lateral surface (6) of the underside of the head consists of two sections (11, 12), which edge, in the first section (11) which is located radially further towards the outside relative to a longitudinal axis of the screw (1), is curved in the direction of rotation during screwing-in of the screw (1) and, in the second section (12) which is located radially further towards the inside, is straight, wherein the screw head has the shape of two truncated cones that adjoin one another axially, which cones have different cone angles; wherein the truncated cones taper in the same direction and merge into one another in a circumferential inner edge (5) of the lateral surface, **characterised in that** the first section (11) of the front edge (9) of the milling pocket (7) having the curve is located on the truncated cone of larger diameter and adjoins on the outside the circumferential inner edge (5) at which the two truncated cones merge into one another; the second, straight section (12) of the front edge (9) of the milling pocket (7) is located on the truncated cone of smaller diameter; and the first section (11) of the front edge (9) merges into the second section (12) at the circumferential inner edge (5).

2. Screw according to claim 1, **characterised in that,** in the second section (12) located radially further towards the inside, the edge (9) of the milling pocket (7) that is at the front in the direction of rotation during screwing-in of the screw (1) is a line of intersection between a plane and the lateral surface of the underside of the head.

3. Screw according to claim 1 or 2, **characterised in that,** in the second section (12) located radially further towards the inside, the edge (9) of the milling pocket (7) that is at the front in the direction of rotation during screwing-in of the screw (1) runs obliquely from the inside to the outside in the direction of rotation during screwing-in of the screw (1).

4. Screw according to one or more of claims 1 to 3, **characterised in that** the cutter (8) runs obliquely from the inside to the outside in a direction opposite to the direction of rotation during screwing-in of the screw (1).

5. Screw according to one or more of the preceding claims, **characterised in that** a base surface of the milling pocket (7) adjoining the edge (9) of the milling pocket (7) that is at the front in the direction of rotation during screwing-in of the screw (1) is concavely curved.

## Revendications

1. Vis munie d'une tête fraisée (4) présentant une face inférieure matérialisant la tête de ladite vis, au moins un alvéole fraisé (7) étant creusé à partir d'une surface de l'enveloppe de la face inférieure de la tête, alvéole dont l'arête, postérieure dans une direction de rotation lors d'un vissage de la vis (1), forme, au niveau d'une transition avec ladite surface de l'enveloppe de la face inférieure de la tête, un tranchant (8) conçu pour façonner une fraisure dans une pièce, lors d'un vissage de la vis (1) dans ladite pièce, sachant qu'une arête (9) dudit alvéole fraisé (7), antérieure dans ladite direction de rotation lors du vissage de ladite vis (1), est constituée de deux régions (11, 12) au niveau d'une transition avec ladite surface (6) de l'enveloppe de la face inférieure de la tête, présente une courbure dans ladite direction de rotation lors du vissage de ladite vis (1), dans la première région (11) située le plus à l'extérieur dans le sens radial par rapport à un axe longitudinal de la vis (1), et est rectiligne dans la seconde région (12) située le plus à l'intérieur dans le sens radial, la tête de ladite vis revêtant la forme de deux troncs de cône se rattachant l'un à l'autre dans le sens axial et présentant des angles de conicité différents, lesquels troncs de cône s'amenuisent dans une même direction et s'imbriquent mutuellement dans une arête intérieure périphérique (5) de ladite surface de l'enveloppe, **caractérisée par le fait que** la première région (11) de l'arête antérieure (9) de l'alvéole fraisé (7), pourvue de la courbure, se trouve au niveau du tronc de cône de plus fort diamètre et se rattache, extérieurement, à l'arête intérieure périphérique (5) au niveau de laquelle les deux troncs de cône s'imbriquent mutuellement ; **par le fait que** la seconde région rectiligne (12) de ladite arête antérieure (9) dudit alvéole fraisé (7) se trouve au niveau du tronc de cône de diamètre moindre ; et **par le fait que** ladite première région (11) de ladite arête antérieure (9) fusionne dans ladite seconde région (12) au niveau de ladite arête intérieure périphérique (5).

2. Vis selon la revendication 1, **caractérisée par le fait que** l'arête (9) de l'alvéole fraisé (7), antérieure dans la direction de rotation lors du vissage de ladite vis (1), est une ligne d'intersection d'un plan avec la surface de l'enveloppe de la face inférieure de la tête dans la seconde région (12) située le plus à l'intérieur dans le sens radial.

3. Vis selon la revendication 1 ou 2, **caractérisée par le fait que** l'arête (9) de l'alvéole fraisé (7), antérieure dans la direction de rotation lors du vissage de ladite vis (1), s'étend à l'oblique de l'intérieur vers l'extérieur dans la direction de rotation, lors du vissage de ladite vis (1), dans la seconde région (12) située le plus à l'intérieur dans le sens radial.

4. Vis selon l'une ou plusieurs des revendications 1 à 3, **caractérisée par le fait que** le tranchant (8) s'étend à l'oblique, de l'intérieur vers l'extérieur, en sens inverse de la direction de rotation lors du vissage de ladite vis (1).

5. Vis selon l'une ou plusieurs des revendications précédentes, **caractérisée par le fait qu'**une surface de base de l'alvéole fraisé (7), se rattachant à l'arête (9) dudit alvéole fraisé (7) antérieure dans la direction de rotation, lors du vissage de ladite vis (1), est dotée d'un bombement circulaire en creux.
